Europäisches Patentamt

European Patent Office

Office européen des brevets

(19)

(11) Publication number: **0 033 162
B1**

(12) **EUROPEAN PATENT SPECIFICATION**

(45) Date of publication of patent specification: **17.10.84**

(51) Int. Cl.³: **H 04 M 19/04**

(21) Application number: **81100623.8**

(22) Date of filing: **28.01.81**

(54) **Digital tone ringer.**

(30) Priority: **29.01.80 IT 6711980**

(43) Date of publication of application:
**05.08.81 Bulletin 81/31**

(45) Publication of the grant of the patent:
**17.10.84 Bulletin 84/42**

(84) Designated Contracting States:
**BE CH DE FR GB LI NL SE**

(56) References cited:
**DE-A-2 520 532
FR-A-2 378 410
GB-A-2 000 660
US-A-3 508 012
US-A-3 808 379
US-A-4 154 989**

(73) Proprietor: **CSELT Centro Studi e Laboratori
Telecomunicazioni S.p.A.
Via Guglielmo Reiss Romoli, 274
I-10148 Turin (IT)**

(72) Inventor: **Pira, Franco
Via Garibaldi, 14
Beinasco Torino (IT)**
Inventor: **Ponte, Giovanni
Via Mentana, 26
Turin (IT)**

(74) Representative: **Riederer Freiherr von Paar zu
Schönau, Anton et al
Freyung 615 Postfach 2664
D-8300 Landshut (DE)**

Courier Press, Leamington Spa, England.

## Description

This invention relates to tone ringers for use in telephone sets and more particularly it concerns a digital telephone ringer able to receive call signals coming both from conventional electro-mechanical exchanges and from up-to-date electronic exchanges.

At present the telephone service is controlled either by conventional electro-mechanical or electronic exchanges. Some differences exist in call signals sent from said exchanges to the subscribers: conventional exchanges generally send a call signal with a rather high voltage level (of the order of 100 volts) at a rather low frequency ranging from 20 Hz to 30 Hz; more particularly in some exchanges there is also provided a call signal at 50 Hz frequency. As known said signals are able to directly excite a conventional tone ringer of electro-mechanical type.

Electronic exchanges, on the other hand, generally emit a voice-band tone call signal whose frequency range is 400 to 500 Hz and whose voltage level is much lower (of the order of a few volts) and thus cannot directly excite an electro-mechanical tone-ringer. Consequently, in telephone sets connected with electronic exchanges a suitable electronic tone ringer is provided. However, electronic tone ringers cannot be directly excited by the call signals of electro-mechanical exchanges.

If telephone sets could be equipped with tone ringers compatible with both the above mentioned types of call signal, expensive modifications in the exchanges and/or in the telephone sets connected thereto could be avoided whenever an electro-mechanical exchange is replaced by a new electronic exchange.

In US—A—4154989, a tone ringer is described of electronic type that checks the frequency and duration of a call signal. However, these checking means are insufficient to avoid voice-band disturbances because no checking is prejudiciably effected on the amplitude of said call signal. In addition, in said patent specification the control of the call signal of the electro-mechanical type is unsatisfactory because only an amplitude check and an insufficient duration check are made that cannot filter the noises of 50 Hz induced by the electrical networks as well as those due to the dialling operated by telephone sets in parallel.

A further disadvantage of the tone ringer described in said US patent specification is that it can be activated also by the voice during a call, because no protection means able to switch off during the call the devices designed to detect the call signals coming from exchanges of the electronic type are provided.

Furthermore, the most part of the telephone ringers known in the art in practical use are of the analog type. As known, an analog ringer entails insufficient protection against noises;

high fabrication costs as said ringer is difficult to make by integrated technology; and high power dissipation in absence of a call signal.

An example of an analog electronic tone ringer is described in British Patent Application GB—A—2000660: this embodiment comprises an analog filter for attenuating the amplitude of the signals having frequencies out of the voice-band, this filter followed by an integrator circuit and threshold circuit. The main drawback of embodiments of such a type is that the filter does not measure the exact frequency value of the input signal: that is it lets all the voice-band disturbances reach the integrator. In addition, if this circuit is used in telephone sets connected in parallel, it does not eliminate the dialling pulses that can also activate the ringer. Therefore, as it has been already said, such a type of circuit does not carry out an effective function of protection against disturbances and noise.

These shortcomings are obviated by the present invention of a tone ringer of the digital type as defined in claim 1. The tone ringer of the invention can be realized so that its operation requires no polarity inversion on the subscriber's loop, but is protected against accidental polarity inversions; it is directly fed from the loop and is designed thus as to limit current absorption from the line so as to allow the insertion of at least five parallel tone ringers; that, by recognizing the amplitude, the frequency, and the duration of the call signal is protected against noises present along the line; that can produce a sound having equal characteristics independently of the call signal; that being of the digital type is easy to integrate and therefore cheap and reliable; that has independent circuits for the operation both with signals of the conventional type and with signals coming from electronic exchanges so that circuits judged unnecessary can be cut-off.

Another advantage of the considered tone ringer is that it by easy modifications can be made apt to recognize call frequencies also different from the above-mentioned ones.

The foreging and other characteristics of the present invention will become clearer from the following description of a particular embodiment of the same, in which:

— Fig. 1 is a block diagram of the tone ringer;

— Fig. 2 is a block diagram of the detail denoted by CR in Fig. 1.

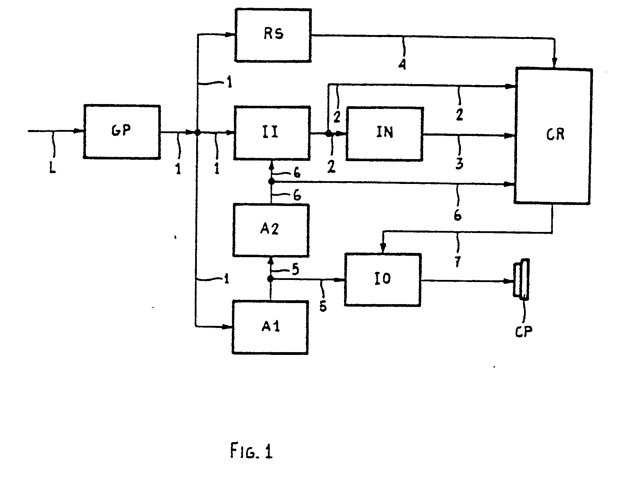

Reference GP in Fig. 1 denotes a circuit protecting against polarity inversion composed for instance of a diode bridge, able to protect the remaining circuit from accidental polarity inversion that might occur on the subscriber's line denoted by L; GP receives the call signal from line L and emits at the output on wire 1 a signal whose polarity never changes.

Reference II denotes an input interface able to match the voltage levels of the signals coming from line L and present on wire 1 to levels compatible with the circuits placed after; afterwards besides II emits at the output a pulsive signal of the same frequency as the signal received at the input.

II can operate only if the signal present at its input exceeds a predetermined threshold, for instance placed at peak-to-peak 200 mV, placed as protection against low-level voiceband noises (crosstalks, etc.)

The embodiment of an interface such as II is not a problem to the person skilled in the art.

Reference IN denotes a usual signal detector, able to emit at the output on wire 3 an enabling signal when at its input, connected to II through wire 2, any signal may be present.

Reference RS denotes a usual detector of threshold signal, able to emit at the output on wire 4 a logic signal when at its input, connected to wire 1, a signal is present of amplitude exceeding a predetermined threshold. Said threshold is dimensioned in accordance with the minimum acceptable value of the call signal coming from telephone exchanges of electromechanical type.

References A1 and A2 denote two conventional power regulators of the series type able to stabilize the voltage, present on wire 1, coming from line L, so as to match it to the voltages needed for feeding some blocks of the ringing circuit.

More particularly, A1 provides at the output a d.c. voltage supply apt to driving a conventional output interface IO, that in turn is apt to driving an electro-acoustic transducer, for instance a telephone capsule CP used to reproduce the ringing tone. Interface IO receives, as it will be seen, from wire 7 the signal that is to be reproduced by capsule CP.

A2 receives from A1, by means of wire 5, a dc- voltage already stabilized and emits at the output on wire 6 a dc- voltage, reduced with respect to the one of the input, just when the input voltage, is beyond a predetermined value; otherwise it produces at the output a voltage level near zero. This behaviour of A2 is obtained by simply introducing a threshold system, for instance a zener diode, at its input.

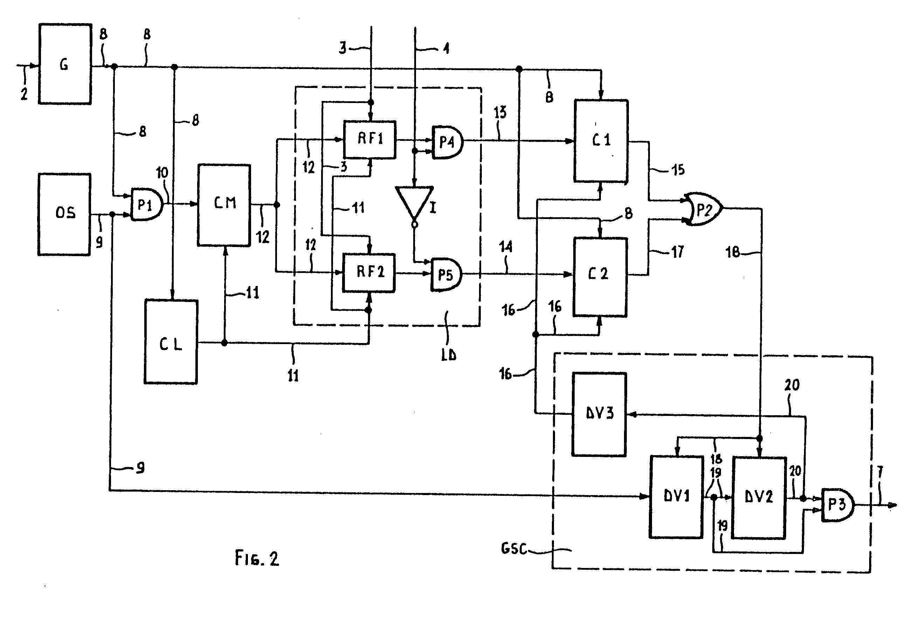

Reference CR denotes a circuit able to effect the recognition of the call signal; CR, that will be examined in detail in connection with Fig. 2, receives: the supply from A2 by means of wire 6; the signal to be recognized from II by means of wire 2; a signal enabling to the operation arriving from IN via wire 3, and an enabling signal, arriving from RS via wire 4, that will be used, as seen hereinafter, to transfer inside circuit CR the signal indicating the possible occurrence of the recognition of a call signal.

CR emits at the output on wire 7 towards IO the ringing signal that must be reproduced by CP.

Reference G in Fig. 2 denotes a circuit of the known type apt to divide by two the frequency of the pulsive signal it receives at the input from wire 2, so that it emits at the output on wire 8 a signal that with respect to that present on wire 2 has half frequency and then duty cycle equal to 50%.

Reference OS denotes a conventional oscillator apt to generate on wire 9 a pulsive signal of frequency fb that serves, as will be seen hereinafter, for the measure of the frequency of the call signal present on wire 8.

Reference P1 denotes a usual AND gate, apt to receive at the two inputs the signals present on wires 8 and 9 and to emit at the output on wire 10 the logic AND of the two signals, basically consisting of a signal of frequency fb for as long as the pulsive signal, present on wire 8, is at logic value "1".

In this way, to determine the frequency of the call signal present on wire 8, it will be sufficient to count the number of periods of the signal at frequency fb contained in half-period of the same call signal.

Reference CL denotes a usual delay circuit apt to emit at the output on wire 11 a reset signal of a predetermined time interval since the level of the logic signal that is received at the input on wire 8 has reached logic level "0".

Reference CM denotes a usual counter able to count the number of signal periods at frequency fb received from P1 via wire 10; CM that is reset by the signal it receives from CL via wire 11, emits at the output on connection 12 the binary signal corresponding to the effected counting.

Reference LD denotes a logic network able to recognize, upon receiving the enabling (signal) from wire 3, the binary number received from CM through connection 12. This recognition is repeated whenever the signal present on wire 8 is at logic level "1", said condition is detected by LD through the signal present on wire 11 at the output of CL.

LD basically consists of two combinatory logics RF1, RF2, of two gates of AND type P4, P5, and of an inverter I.

Both combinatory logics RF1, RF2 receive at the input from connection 12 the binary signal emitted by CM, corresponding to the value of the frequency of the call signal. RF1 is provided for the recognition of the frequency of call signals of the conventional type; RF2 for the recognition of the signals of the electronic type.

If the binary signal present on wire 12 corresponds to a call signal of the conventional type, RF1 effects the recognition and emits at the output a pulse towards gate P4, while RF2 remains in rest condition (i.e. is not activated). If said binary number present on connection 12 corresponds, on the contrary, to a call of the electronic type, RF2 effects its recognition by emitting a pulse at the input towards gate P5, while RF1 remains in rest condition.

RF1 and RF2 are enabled to effect the recognition by the signal present on wire 3, that as mentioned is present only when a signal is present on line L (Fig. 1); moreover RF1 and RF2 (Fig. 2) repeat the recognition operation whenever the signal present on wire 8 is at logic level "1" what is possible because RF1 and RF2 are rearranged for the recognition by the "reset signal" coming from wire 11 that, as previously seen, depends on the logic level present on wire 8.

Gates P4 and P5 are enabled by the signal present on wire 4 for the transfer, on wires 13 and 14 respectively, of the signal that may be present on the outputs of RF1 and RF2. More particularly if the signal present on wire 4 is at logic level "0" gate P4 is inhibited while gate P5 is enabled due to the operation of inverter I.

Consequently, when the signal present on wire 4 is at logic level "0", independently of the whether a recognition may be effected by RF1, no signal is present on wire 13 at the output of P4, on the contrary a signal may be present on wire 14, at the output of P5 if RF2 has effected the recognition corresponding to a call signal of electronic type (400 to 500 Hz).

Vice versa, if the signal on 4 is at "1", no signal can be present on wire 14 at the output of P5, while a signal may be present on wire 13, at the output of P4, if RF1 has effected the recognition corresponding to a call signal of electro-mechanical type (20 to 30 Hz; 50 Hz).

Reference C1 denotes a usual counter of the presettable type, able to receive from wire 13 the pulses coming from LD relative to a call of an electro-mechanical kind, to count on the basis of the enabling signal received from wire 8, a determined number of said pulses fixed during the presetting step and to emit at the output on wire 15 a signal of occurred call recognition of electro-mechanical type; the signal on wire 15 lasts for as long as the signal received by C1 from wire 16 is at logic level "1".

Reference C2 denotes a conventional counter equal to C1, but preset on a different basis, that carries out the same functions as to what concerns the pulses coming, via wire 14, from LD concerning a call of electronic type. C2 emits at the output on wire 17 a signal of occurred recognition of a signal of the electronic type, whose duration, analogously to what takes place for C1, depends on logic level "1" of the signal it receives from wire 16.

Reference P2 denotes a conventional logic gate of the OR type, apt to transfer at the output on wire 18 either the signals of occurred recognition that exclude one another, received at the input from wires 15 and 17.

Reference GSC denotes a circuit, whose structure will be examined hereinafter, apt to generate on wire 7 the actual ringing tone signal to be sent to IO (Fig. 1) and reproduced by capsule CP.

GSC receives from wire 9 the signal at frequency fb, generated by OS; from wire 18 the enable signal designed to emit the ringing signal, on wire 7. GSC emits on wire 16 a signal that is to interrupt, in accordance with suitable criteria to be examined hereinafter the generation of the ringing signal.

GSC is also designed to adapt to the specifications of the shape and the duration of the ringing tone.

For instance, according to the specifications for Italy, the ringing signal frequency is of 1 KHz (or 500 Hz) modulated at 20 Hz for the duration of one second.

In the application of the Italian specifications, circuit GSC has been implemented for instance as in Fig. 2 by blocks DV1, DV2, DV3 and P3.

Reference DV1 denotes a frequency divider able to divide frequency fb, received from wire 9, so as to obtain the frequency of 1 KHz (500 Hz) at the output on wire 19 as long as it receives the enabling signal of wire 18.

Reference DV2 denotes a frequency divider, analogous to DV1, apt to convert the signal at 1 KHz (500 Hz) it receives from DV1 via wire 19, into a signal at 20 Hz that it emits at the output on wire 20 for the whole time during which it receives the enabling signal from wire 18.

Reference DV3 denotes a frequency divider, analogous to DV1 and DV2, able to receive the signal at 20 Hz from DV2 via wire 20 and to emit at the output on wire 16 a signal at logic level "0" just a second after the enabling signal, already examined, appears on wire 18.

Reference P3 denotes a usual AND gate, able to supply at the output on wire 7 the logic AND of the two signals received at the input from wire 19 and 20, that is a signal consisting of subsequent trains of pulses at 1 KHz of the duration of 25 milliseconds.

It is clear that to comply with specifications different from the Italian ones, circuit GSC must have a different structure apt to the purpose; in any case its practical embodiment is not a problem to the person skilled in the art.

The operation of the tone ringer, object of the invention is now to be examined.

The call signal that may be present on line L (Fig. 1), consists, as well known, in the superimposition of the alternating voltage of the proper call signal upon the dc supply voltage, coming from the exchange.

GP (Fig. 1) transfers the call signal, it receives from L, onto wire 1, so that the polarity on wire 1 may remain unchanged, for instance positive with respect to ground potential.

The voltage present on wire 1 is stabilized by regulator A1 and converted into d.c. voltage emitted on wire 5 apt to drive, by means of interface IO, telephone capsule CP.

Said d.c. voltage, present on wire 5, is reduced by A2 so as to obtain on wire 6 the d.c. voltage, necessary to supply blocks II and CR, only when the d.c. voltage present on wire 5 is higher than a predetermined value (for instance: higher than 20 V). On the contrary, A2 generates at the output on wire 6 a voltage level near zero so as to inhibit the operation of blocks II and CR.

In this way the fact is exploited that after the "off-hook" condition the d.c. voltage present on line L lowers considerably, so that during the call the speech signal cannot simulate the call signal of the electronic type and then energize the tone ringer.

It is worth noticing that the operation of blocks GP, A1, A2, IO, CP and OS (Figures 1 and 2) is completely independent of the presence or absence of call signals on line L.

It is the same for circuit GSC, that has the only task of producing the waveform required for the ringing signal to send, through wires 7 and IO, to CP, once the logic circuits prior to GSC have detected the presence of the call signal on line L and have identified the signal type.

More particularly GSC, once it has been activated by the enable signal coming from P2 through wire 18, emits at the output on wire 16 towards C1 and C2 a signal that is generally at logic level "1" and goes into logic level "0" for a short time period, exactly with the delay of one second from the instant at which GSC has received from P2 the enable signal; logic "0" emitted on wire 16 resets counters C1 and C2.

Let us neglect now the presence of noises that might be present on line L and let us suppose that no call signal might be present on L.

Under these conditions the circuit of Fig. 1 is generally designed to recognize a possible call signal of the electronic type.

In fact, due to the absence of the signal on wire 1, RS is not energized and then keeps at the output on wire 4 a logic "0" that disables gate P4 (Fig. 2) connected to wire 13 and enables gate P5 connected to wire 14; II too, since it receives no signal, keeps the logic level of the output connected to wire 2, at "0", then IN keeps circuit LD (Fig. 2) disabled to recognition via wire 3.

Moreover the absence of a signal on wire 2 causes a logic "0" to be generated by G on wire 8; said logic "0" in turn propagates through CL on wire 11 causing the reset of CM and the initialization of LD that prepares a new recognition.

Always under the hypothesis of absence of noises, let us suppose now that on line L there is present a call signal coming from an exchange of the electronic type.

RS remains unactivated, due to the low amplitude level of the signal present on wire 1.

II amplifies the signal it receives from wire 1 and sends it, via wire 2, to IN and G (Fig. 2).

IN (Fig. 1), after recognizing the presence of an input signal emits at the output of wire 3 a logic level "1" that enables RF1 and RF2 of LD to effect the recognition.

G (Fig. 2) emits at the output on wire 8 a pulsive signal having frequency equal to half the signal present on wire 1, and then on wire 2; whenever the logic level on wire 8 is at logic value "1", C1 and C2 are enabled for the counting the P1 is enabled to transfer at the output on wire 10 towards CM the frequency signal fb it receives from OS via wire 9.

CM counts the pulses of fb and emits the result of this counting with binary coding on connection 12 towards LD, that decodes the meaning.

If the value recognized is comprised within the predetermined ones (for instance, within 400 and 450 Hz) LD emits on wire 14 towards C2 a pulse every time the level of the signal present on wire 8 is at logic level "1".

Before the intervention of C2 a frequency check was made; in C2, on the contrary, a further check on the duration of said signal takes place.

In fact, as already seen, on wire 14 at the output of LD there is present a pulse whenever the train of pulses at frequency fb present on wire 10 is recognized as part of a call signal; the sequence of these pulses on wire 14 is counted by C2 to the attainment of a value, predetermined while designing the apparatus; then C2 emits on wire 17 a signal that is transferred via P2 and wire 18 to GSC as enabling signal for the transfer of the ringing signal to the subscriber.

Said ringing signal will last a second, because after that time the reset signal for C2 will be emitted from GSC on wire 16.

Let us still suppose that there is absence of noise and that a call signal, coming from an electro-mechanical exchange, is present on line L.

Said signal is recognized by RS, as it has an amplitude sufficiently higher than the threshold fixed for it; as a consequence RS sends a logic "1" to LD (Fig. 2), via wire 4, so as to disable gate P5 and therefore the output connected to wire 14 and so as to enable gate P4 and therefore the output connected to wire 13.

What was mentioned for the electronic call signal applies also to this case, the only difference is that C1 effects the counting instead of C2.

Two separate counters (C1, and C2) for the two kinds of call signals are provided because for the following reason: as the frequency of the electronic call signal is within the speech band, a more careful check is effected on the actual signal duration. In this way C2 can be preset at a counting value much higher than the one relating to C1, for instance it can be 10 times higher.

Let us see the operation of the ringing circuit described in the actual case of presence of noises and generally of disturbances on line L, disturbances that might simulate for instance a call signal.

Among the noises that may be present on L, the most frequent and dangerous is that at 50 Hz induced by the electrical supply network.

For the elimination of said noise it would be enough if LD would refuse said signal at 50 Hz; but that generally is impossible because in a number of telephone networks, as for instance the Italian one, the frequency at 50 Hz is utilized as call signal in a number of exchanges.

The problem of eliminating the noise at 50 Hz has been solved by the tone ringer, object of the invention in the following way.

Obviously the actual call signal at 50 Hz is different from the noise at the same frequency for two main reasons: the amplitude, that for noises can hardly exceed the value of 60 V peak-to peak, equal to that of the threshold provided in RS; the duration, that in case of an actual call signal is of the order of one second while a noise at a frequency of 50 Hz cannot easily maintain the amplitude at a value exceeding 60 volts for nearly one second.

In our case a noise at the frequency of 50 Hz and amplitude inferior to the threshold of 60 V as it is not recognized by RS is blocked in LD because in this case, as seen, gate P4 is not enabled and then there is no signal at the output connected to wire 13; if on the contrary the amplitude were higher than threshold, the noise might attain C1 via wire 13, but it would be blocked there because its duration could not easily be such that counter C1, duly preset, might emit an output signal on wire 15.

All the other noises that might be present on line L have either insufficient amplitude or insufficient duration and are filtered exactly as the noise at 50 Hz.

It is to point out that the ringing circuit object of the invenion filters also the noises deriving from other auxiliary telephone sets, connected in parallel with the calling one, as, for instance, the noises due to the telephone dial and to off-hook.

In fact such noises generally correspond to a sequence of pulses at 10 Hz and as such they are filtered by the frequency identifiers RF1, RF2, of LD.

A variation of the just described tone ringer consists in providing the frequency divider DV3 (Fig. 2) contained in GSC with a simple counter modulo 2 so as to allow DV3 to discriminate the first ringing pulse, consequent to the appearance of signal on wire 8, with respect to the remaining ringing pulses.

In this way for the first pulse only it is possible to send the reset signal on wire 16 to C1 and C2, just half a second after the appearance of the signal of wire 18, instead of after one second.

As an effect the ringing tone reproduced by CP (Fig. 1) will be shorter in any case. The advantage is clear: in case a noise might overcome the frequency and duration checks, already examined, it would give place only a reduced ringing signal, that could be easily taken for a noise; however it is very unusual for said noises to come the one after the next with the same rhythm as that of a call signal.

## Claims

1. Digital telephone tone ringer that is apt to energize an electro-acoustic transducer on the basis of a call signal coming through a line from a telephone exchange, comprising a threshold detector (RS) for making an amplitude check on said call signal and a first counter (CM) for making a frequency check on said call signal, characterised in that said first counter counts the number of periods of a predetermined-frequency signal (fb) that are contained in a predetermined portion of the call signal period, and activates, on the basis of the number of counted periods, different independent circuits comprising, respectively, a second (C1) or a third (C2) counter apt to make a duration check on said call signal, preset to different threshold values and alternatively enabled by said threshold detector (RS) when the call signal exceeds or respectively does not exceed the threshold of the detector (RS), said second (C1) or third (C2) counter supplying, once a respective duration threshold has been exceeded, a signal of occurred identification of a call signal coming from an electro-mechanical or respectively electronic telephone exchange.

2. Digital telephone tone ringer according to claim 1, characterized in that the threshold of said detector (RS) is sized depending on minimum acceptable value for a call signal coming from electro-mechanical exchanges.

3. Digital telephone tone ringer according to claims 1 or 2, characterized in that said first counter (CM) is apt to receive at the input the logic AND between said predetermined-frequency signal (fb) which is locally generated and said call signal that is frequency divided by a frequency divider (G) so as to count during a semi-period of the divided frequency, and has its output sending the counting results connected to two combinatory logics (RF1, RF2), the first logic (RF1) being apt to recognize the counting value corresponding to the frequency of the call signals coming from electro-mechanical telephone exchanges and the second logic (RF2) that of the call signals coming from electronic telephone exchanges, these logics emitting, once the respective recognition has occurred, at the output a pulse towards a first (P4) or a second (P5) logic gate, respectively, said first logic gate or said second logic gate being enabled by the output of the threshold detector (RS) respectively when the call signal exceeds or does not exceed the threshold.

4. Digital telephone tone ringer according to claim 3, characterized in that said second counter (C1) is apt to count the pulses coming from said first gate (P4), and said third counter (C2), preset to a threshold value greater than that of said second counter (C1), is apt to count the pulses coming from said second gate (P5), said second and third counters being enabled by the output of said frequency divider (G).

5. Digital telephone tone ringer according to any of the previous claims, characterized in that for the excitation of said electro-acoustic transducer a circuit (GSC) is provided able to utilize said predetermined-frequency signal (fb) in order to emit, on the basis of the received signal of occurred check, through a third gate (P2), from said second (C1) or third (C2) counters, a ringing tone with predetermined duration and form towards the electro-acoustical transducer.

6. Digital telephone tone ringer according to claim 5, characterized in that said circuit (GSC) consists of a first frequency divider (DV1) apt to extract from said predetermined-frequency signal (fb) a signal at frequency of 1 kHz (or 500 Hz) for as long as it receives the signal from said third gate (P2); a second frequency divider (DV2) apt to extract from said signal at 1 kHz frequency (or 500 Hz) a signal at 20 Hz frequency for the whole time during which it receives the signal from said third gate (P2); a fourth logic gate (P3) apt to produce said ringing signal by effecting the logic AND of said two signals produced by said first (DV1) and second (DV2) frequency dividers; a third frequency divider (DV3) apt to extract from said 20 Hz signal produced by said second divider (DV2) a signal assuming the logic level "0" exactly a second after said second divider (DV2) has received the signal from said third gate (P2), said logic level "0" being utilized by said second (C1) and third counters (C2) as reset signal.

## Revendications

1. Circuit receveur d'appel acoustique de type numérique apte à exciter un transducteur électro-acoustique d'après un signal d'appel provenant, au moyen d'une ligne, d'un central téléphonique, qui comprend un détecteur à seuil (RS) pour effectuer un contrôle en amplitude sur ledit signal d'appel et un premier compteur (CM) pour effectuer un contrôle en fréquence sur ledit signal d'appel, caractérisé en ce que ledit premier compteur compte le nombre de périodes d'un signal de fréquence prédéterminée (fb) qui sont contenues dans une partie prédéterminée de la période du signal d'appel, et active, sur la base du nombre de périodes comptées, des différents circuits indépendants qui comprennent respectivement un deuxième (C1) ou un troisième (C2) compteur apte à effectuer un contrôle de durée sur ledit signal d'appel, lesdits compteurs étant prépositionnés sur des valeurs différentes de seuil et alternativement validés par ledit détecteur à seuil (RS) lorsque le signal d'appel dépasse ou respectivement ne dépasse pas le seuil du détecteur (RS), lesdits deuxième (C1) ou troisième (C2) compteur fournissant, une fois qu'un respectif seuil de durée a été dépassé, un signal d'identification averée d'un signal d'appel qui arrive d'un central téléphonique électromécanique ou respectivement électronique.

2. Circuit receveur d'appel acoustique de type numérique selon la revendication 1, caractérisé en ce que le seuil dudit détecteur (RS) est dimensionné suivant une valeur minimum acceptable pour un signal d'appel provenant des centraux électromécaniques.

3. Circuit receveur d'appel acoustique de type numérique, selon les revendications 1 et 2, caractérisé en ce que ledit premier compteur (CM) est apte à recevoir à l'entrée l'ET logique entre ledit signal d'une frequence prédéterminée (fb), qui est engendré localement, et ledit signal d'appel, dont la fréquence est divisée par un diviseur de fréquence (G) de manière que ledit compteur puisse compter pendant la demi-période de la fréquence divisée et dont la sortie envoie le résultat du comptage à deux logiques combinatoires (RF1, RF2), dont la première (RF1) est aptre à reconnaître la valeur de comtage correspondante à la fréquence des signaux d'appel provenant des centraux de type électromécanique et la seconde (RF2) la fréquence des signaux d'appel provenant des centraux de type électronique, lesdites logiques émettant à la sortie, d'après ladite reconnaissance, une impulsion respectivemente vers une première (P4) ou une deuxième (P5) porte logique, lesdites première ou deuxième porte logique étant validées par la sortie du détecteur à seuil (RS) respectivement lorsque le signal d'appel dépasse ou ne depasse pas le seuil.

4. Circuit receveur d'appel acoustique de type numérique suivant la revendication 3, caractérisé en ce que ledit deuxième compteur (C1) est apte à compter les impulsions provenant de ladite première porte (P4), et ledit troisième compteur (C2) prépositionné à une certaine valeur de seuil plus élevée que celle dudit deuxième compteur (C1), est apte a compter les impulsions provenant de ladite deuxième porte (P5), lesdits deuxième et troisième compteur étant validés par la sortie dudit diviseur en fréquence (G).

5. Circuit receveur d'appel acoustique de type numérique suivant n'importe quelle des revendications qui précèdent, caractérisé en ce que pour l'excitation de ce transducteur électro-acoustique il est prévu un circuit (GSC) apte à employer le signal de frequence prédéterminée (fb) pour émettre, sur la base dudit signal de contrôle effectué qu'il a reçu au moyen d'une troisième port (P2) dudit deuxième (C1) ou troisième (C2) compteur, un signal d'appel de forme et durée prédéterminées vers le transducteur électro-acoustique.

6. Circuit receveur d'appel acoustique de type numérique selon la revendication 5, caractérisé en ce que ledit circuit (GSC) est constitué par: un premier diviseur en fréquence (DV1) apte à obtenir dudit signal de fréquence prédéterminée (fb) un signal à fréquence 1 kHz (ou 500 Hz) pendant tout le temps où il reçoit le signal de ladite troisième porte (P2); un deuxième diviseur en fréquence (DV2) apte à obtenir dudit signal à fréquence 1 kHz (ou 500 Hz) un signal à fréquence 20 Hz pendant tout le temps où il reçoit le signal de ladite troisième porte (P2); une quatrième porte logique (P3), apte à engendrer ledit signal d'appel en effectuant l'ET logique des deux signaux produits par lesdits premier (DV1) et deuxième (DV2) diviseur en fréquence; un troisième diviseur en fréquence (DV3) apte à obtenir dudit signal à 20 Hz engendré par le deuxième diviseur (DV2) un signal qui est mis au niveau logique "0" exactement une seconde après que ledit deuxième diviseur (DV2) a reçu le signal provenant de ladite troisième porte (P2), ce niveau logique "0" étant utilisé par lesdits deuxième (C1) et troisième (C2) compteurs comme signal de mise à zéro.

**Patentansprüche**

1. Digitaler akustischer Wecker für Fernsprecher, der einen elektro-akustischen Umsetzer aufgrund eines Rufsignals, das über eine Leitung von einer Fernsprechvermittlungsstelle kommt, mit Energie speist, mit einem Schwellendetektor (RS) zur Durchführung einer Amplitudenüberprüfung des Rufsignals und einem ersten Zähler (CM), der eine Frequenzüberprüfung des Rufsignals durchführt, dadurch gekennzeichnet, daß der erste Zähler die Periodenzahl eines Signals (fb) gegebener Frequenz, die in einem gegebenen Teil der Rufsignalperiode enthalten sind, zählt und aufgrund der Zahl der gezählten Perioden unterschiedliche unabhängige Schaltungen aktiviert, zu denen ein zweiter Zähler (C1) bzw. ein dritter Zähler (C2) gehören, die eine Zeitdauerüberprüfung des Rufsignals durchführen, auf verschiedene Schwellenwerte eingestellt sind und alternativ vom Schwellendetektor (RS) eingeschaltet werden, wenn das Rufsignal die Schwelle dieses Detektors (RS) überschreitet bzw. nicht überschreitet, und die, wenn eine entsprechende Zeitdauerschwelle überschritten worden ist, ein Signal durchgeführter Identifizierung eines Rufsignals, das von einer elektromechanischen bzw. von einer elektronischen Vermittlungsstelle kommt, abgeben.

2. Digitaler akustischer Wecker nach Anspruch 1, dadurch gekennzeichnet, daß die Schwelle des Detektors (RS) in Abhängigkeit vom mindestakzeptablen Wert eines von einer elektro-mechanischen Vermittlungsstelle kommenden Rufsignals dimensioniert ist.

3. Digitaler akustischer Wecker nach Anspruch 1 oder 2, dadurch gekennzeichnet, daß der erste Zähler (CM) eingangsseitig das logische UND-Produkt zwischen dem Signal (fb) der gegebenen Frequenz, das örtlich erzeugt wird, und dem Rufsignal, das von einem Frequenzteiler (G) frequenzgeteilt ist, empfängt und so während einer Halbperiode des frequenzgeteilten Signals zählt, und an seinem Ausgang, der die Zählergebnisse abgibt, mit zwei logischen Verknüpfungsschaltungen (RF1, RF2) verbunden ist, von denen die erste Verknüpfungsschaltung (RF1) den der Frequenz der Rufsignale, die von elektro-mechanischen Vermittlungsstellen kommen, entsprechenden Zählwert erkennt und die zweite Verknüpfungsschaltung (RF2) den Zählwert der Rufsignale, die von elektronischen Vermittlungsstellen kommen, erkennt und die, wenn eine entsprechende Erkennung stattgefunden hat, ausgangsseitig einen Impuls an ein erstes logisches Tor (P4) bzw. ein zweites logisches Tor (P5) abgeben, von denen das erste logische Tor durch das Ausgangssignal des Schwellendetektors (RS) dann, wenn das Rufsignal die Schwelle überschreitet, und das zweite logische Tor dann, wenn das Rufsignal die Schwelle nicht überschreitet, durchgeschaltet wird.

4. Digitaler akustischer Wecker nach Anspruch 3, dadurch gekennzeichnet, daß der zweite Zähler (C1) die vom ersten Tor (P4) kommenden Impulse zählt und der dritte Zähler (C2), der auf eine höhere Schwelle als der zweite Zähler (C1) eingestellt ist, die vom zweiten Tor (P5) kommenden Impulse zählt und der zweite und der dritte Zähler durch das Ausgangssignal des Frequenzteilers (G) eingeschaltet sind.

5. Digitaler akustischer Wecker nach einem der vorhergehenden Ansprüche, dadurch gekennzeichnet, daß zur Erregung des elektroakustischen Umsetzers eine Schaltung (GSC) vorhanden ist, die das Signal (fb) der gegebenen Frequenz auswertet, um auf der Grundlage des vom zweiten Zähler (C1) oder vom dritten Zähler (C2) über ein drittes Tor (P2) empfangenen Signals der durchgeführten Überprüfung ein Weckertonsignal gegebener Dauer und Form an den elektro-akustischen Umsetzer abzugeben.

6. Digitaler akustischer Wecker nach Anspruch 5, dadurch gekennzeichnet, daß diese Schaltung (GSC) aus folgenden Einzelschaltungen besteht: einem ersten Frequenzteiler (DV1), der aus dem Signal (fb) der gegebenen Frequenz ein Signal einer Frequenz von 1 kHz (oder 500 Hz) so lang extrahiert, als er das Signal vom dritten Tor (P2) empfängt; einem zweiten Frequenzteiler (DV2), der aus dem Signal der Frequenz von 1 kHz (oder 500 Hz) ein Signal mit einer Frequenz von 20 Hz während der gesamten Zeit extrahiert, während derer er das Signal vom dritten Tor (P2) empfängt; einem vierten logischen Tor (P3), das das Weckersignal dadurch erzeugt, daß es das logische UND-Produkt der beiden vom ersten Frequenzteiler (DV1) und vom zweiten Frequenzteiler (DV2) erzeugen Signale erzeugt; einem dritten Frequenzteiler (DV3), der aus dem von zweiten Frequenzteiler (DV2) erzeugten 20 Hz-Signal ein Signal extrahiert, das den booleschen Wert "0" genau eine Sekunde, nachdem der zweite Frequenzteiler (DV2) das Signal vom dritten Tor (P2) empfangen hat, annimmt, wobei der boolesche Wert "0" vom zweiten Zähler (C1) und vom dritten Zähler (C2) als Rückstellsignal verwendet wird.

FIG. 1

Fig. 2

0033 162